(19) Europäisches Patentamt
European Patent Office
Office européen des brevets

(11) EP 3 575 449 A1

(12) EUROPEAN PATENT APPLICATION
published in accordance with Art. 153(4) EPC

(43) Date of publication:
**04.12.2019 Bulletin 2019/49**

(21) Application number: **18745430.1**

(22) Date of filing: **26.01.2018**

(51) Int Cl.:
***C25D 7/06*** *(2006.01)* ***B60C 9/00*** *(2006.01)*
***C25D 5/26*** *(2006.01)* ***D07B 1/06*** *(2006.01)*

(86) International application number:
**PCT/JP2018/002589**

(87) International publication number:
**WO 2018/139615 (02.08.2018 Gazette 2018/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **26.01.2017 JP 2017012448**

(71) Applicant: **Nippon Steel Corporation**
**Tokyo 1008071 (JP)**

(72) Inventors:
- **FUTABA, Takashi**
**Tokyo 100-8071 (JP)**
- **KODAMA, Junichi**
**Tokyo 100-8071 (JP)**
- **GOTO, Yasuto**
**Tokyo 100-8071 (JP)**
- **KOBAYASHI, Akinobu**
**Tokyo 100-8071 (JP)**

(74) Representative: **Vossius & Partner Patentanwälte Rechtsanwälte mbB**
**Siebertstrasse 3**
**81675 München (DE)**

# (54) PLATED STEEL WIRE, STEEL CORD, AND RUBBER-PLATED STEEL WIRE COMPOSITE

(57) A plated steel wire including a film layer located on a surface of a steel wire and including at least any element selected from an element group constituted of Co, Cr, Cu, Ni, P, Sn, Mn and Fe, and Zn, wherein: a content of each of the elements selected from the element group in the film layer is 0.1 mass% or more; a natural immersion potential at 35°C of the film layer is more electronegative than -0.5 Vvs.NHE; and the film layer does not include an intermetallic compound composed of at least any element selected from the element group, and Zn, or when the film layer includes the intermetallic compound, a length of the intermetallic compound is 1 μm or less.

FIG.2

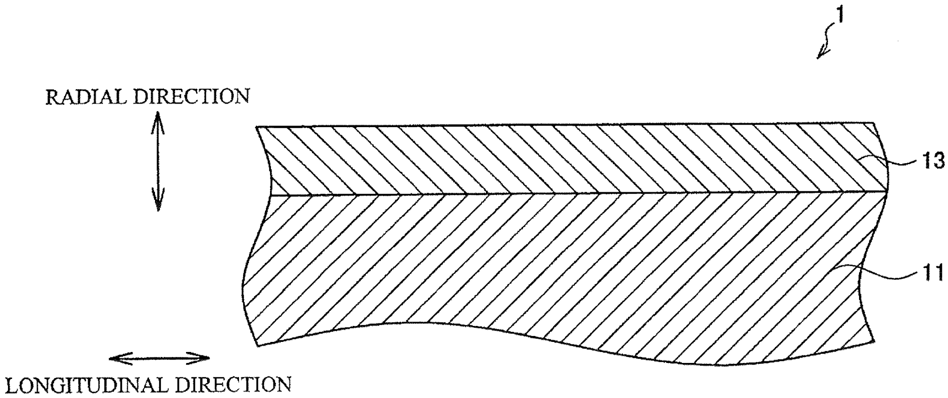


EP 3 575 449 A1

## Description

[Technical Field]

The present invention relates to a plated steel wire, a steel cord and a rubber-plated steel wire composite.

This application is based upon and claims the benefit of priority of the prior Japanese Patent Application No. 2017-012448, filed in Japan on January 26th, 2017, the entire contents of which are incorporated herein by reference.

[Background Art]

In general, in rubber products such as a tire and a conveyor, for the purpose of reinforcement thereof, there is used a steel cord (plated steel cord) obtained by twisting a plurality of steel wires whose surfaces are brass plated (copper-zinc alloy plated) and in which the surfaces of such brass-plating film layers are further covered with rubber, for example. As causes of shortening a life of these rubber products reinforced with the steel cord, there are corrosion of the steel wire and corrosion fatigue caused by the corrosion. The rubber to be used for the tire, the conveyor, and so on is penetrated by water and oxygen, and various additives are used for the rubber product in order to give the rubber desirable capability. Therefore, when the interior of the rubber product contains water, the steel wire is exposed to a corrosive environment, resulting in corrosion.

Moreover, the rubber product is scratched by various external internal factors during use, and water easily infiltrates, whereby the corrosion of the steel wire is sometimes promoted. As a result, there has been a problem that the rubber peels from the steel cord with the corrosion, or the steel cord fractures earlier than its original fatigue life due to the corrosion fatigue, so that the life of the rubber product becomes shorter than the original fatigue life of the steel cord.

As techniques of improving corrosion resistance of the steel wire, there have been proposed a technique of hot dipping with Zn having sacrificial anticorrosive ability with respect to a steel wire being a base material of a steel cord (for example, Patent Document 1), and a technique of hot dipping with a Zn-Al alloy (for example, Patent Document 2). As a further technique of suppressing the corrosion of the steel wire, for example, there has been proposed a technique of plating at least one steel wire located more closely to the interior than an outermost layer strand of the steel cord with Zn, Al, and Cr being metals each having a larger ionization tendency than iron (for example, Patent Document 3). Further, as a technique of improving corrosion resistance of a Zn-plating film layer given the steel wire, there has been proposed a technique of giving Zn plating in which particles of metals baser than Zn, such as Mg, Al, Ti, and Mn, have been dispersed, by electroplating (for example, Patent Document 4). Otherwise, as a technique of improving the corrosion resistance of a plating film layer by alloy plating, there has been proposed a technique of giving Zn-Ni alloy plating in which a Ni concentration of an uppermost surface layer portion of the plating film layer is set to 0 to 1 mass% and a Ni concentration of an innermost layer portion thereof is set to 5 to 20 mass% and whose composition is continuously changed (for example, Patent Document 5).

[Prior Art Document]

[Patent Document]

Patent Document 1: Japanese Patent No. 4921879

Patent Document 2: Japanese Laid-open Patent Publication No. 07-018590

Patent Document 3: Japanese Laid-open Patent Publication No. 2015-196937

Patent Document 4: Japanese Laid-open Patent Publication No. 2016-33235

Patent Document 5: Japanese Laid-open Patent Publication No. 04-183893

[Disclosure of the Invention]

[Problems to Be Solved by the Invention]

However, in the techniques proposed in the above-described Patent Documents 1 to 2, there has been a problem that due to an adhesion amount of hot dipping with respect to the steel wire, the hot dipping makes it difficult to thin a plating film, and a weight of a plated steel wire is greatly increased by the plating, despite high improvement effect of the corrosion resistance of the steel wire. Thickening of the plating film not only increases costs at the occasion of the plating, but also, for example, in a case of using a steel cord composed of hot-dipped steel wires for reinforcing the tire, increases a weight of a tire due to a plating film thickness, resulting in a deterioration in fuel consumption of an automobile, and it is therefore not preferable that the plating film thickness becomes large. Further, in the technique proposed in the above-described Patent Document 3, Zn plating to make a plating film thickness small is poor in effect of corrosion resistance improvement of the steel wire, and on the other hand, in Zn plating to make a plating film thickness large, although the effect of corrosion resistance improvement of the steel wire is obtained, there exists a problem of causing a weight increase of a steel cord similarly to the above-mentioned hot dipping. Moreover, in the technique proposed in the above-described Patent Document 3, because Al and Cr form a strong passive film on a surface of the steel wire, it is difficult to exhibit the sacrificial anticorrosive ability with respect to the steel wire, resulting in poor effect of the corrosion resistance improvement of the steel wire. In addition, although the technique proposed in the above-described Patent Document 4 allows a plating film thickness to be made small by using the electroplating, and moreover, allows durability of Zn to be improved because Mg, Al, Ti, Mn, and so on dispersed in a Zn-plating film layer are more likely to melt than Zn, corrosion resistance of the entire plating film layer has not been sufficient. Moreover, although the technique proposed in the above-described Patent Document 5 suppresses peeling of a plating film from the steel wire at a time of wire drawing by continuously changing the composition of the plating film layer, a wire diameter after final wire drawing is 1 mm, and in a case of aiming at a further smaller diameter, the peeling of the plating film from the steel wire or cracking in the plating film layer occurs, and these each become a starting point of fatigue fracture due to corrosion of the steel wire.

That is, the conventional techniques have not made it possible to suppress occurrence of corrosion of the steel wire and progress thereof and sufficiently suppress peeling of rubber from the steel cord or corrosion fatigue while making a plating film thickness small.

Thus, the present invention has been made in consideration of the above-described circumstances, and an object of the present invention is to provide a plated steel wire processable to a thin wire, a steel cord using the plated steel wires and a rubber-plated steel wire composite (rubber-steel cord composite), which allow a deterioration in adhesiveness to rubber and the corrosion fatigue to be suppressed by suppressing the occurrence of corrosion of the steel wire and the progress thereof even though the plating film thickness is made small.

[Means for Solving the Problems]

The present inventors have conducted a keen study regarding corrosion of a Zn-plated steel wire in order to solve the above-described problems. As a result, it has become clear that although the corrosion of the steel wire can be sufficiently suppressed by hot-dip Zn plating, insufficient corrosion resistance of a plating film itself is linked to early wear of the plating film, a deterioration in adhesiveness to rubber, and an early fracture of a steel cord due to progress of corrosion fatigue. While further conducting a keen study, the present inventors have known that when Zn alloy plating excellent in corrosion resistance of the plating film is given the steel wire by electroplating capable of making a plating film thickness small, a hard intermetallic compound is sometimes present in the electric Zn alloy plating film layer. The intermetallic compound cannot sufficiently follow an elongation of a base steel wire at a time of wire drawing of a plated steel wire due to poor plastic deformability, so that a crack occurs at a present location of the intermetallic compound in the plating film layer, and such a crack becomes a starting point of peeling of the plating film from the steel wire or fatigue fracture. In detail, as illustrated in FIG. 5 being an explanatory view schematically illustrating a partly cross-sectional structure when one example of a plated steel wire 3 according to a comparative example is taken along a longitudinal direction of a steel wire 11, when lengths along a longitudinal direction in a cross section in the longitudinal direction of the steel wire 11, of intermetallic compounds 15 present in a plating film layer 13, are each longer than a predetermined length, the intermetallic compounds 15 cannot sufficiently follow an elongation of the base steel wire 11 at a time of wire drawing of the plated steel wire 3, so that a crack is made to occur in the plating film layer 13.

Thus, the present inventors have conceived based on the above appreciation that in Zn alloy plating capable of forming a plating film by using the electroplating capable of making the plating film thickness small, and excellent in corrosion resistance of the plating film layer while suppressing corrosion of the base steel wire, suppressing the presence of the intermetallic compound is effective for suppressing occurrence of corrosion of the steel wire and progress thereof even though the plating film thickness is made small. As a result of putting a further keen study forward, the present invention as follows has been achieved. A summary of the present invention is as follows.

[1] A plated steel wire including a film layer located on a surface of a steel wire and including at least any element selected from an element group constituted of Co, Cr, Cu, Ni, P, Sn, Mn and Fe, and Zn, wherein: a content of each of the elements selected from the element group in the film layer is 0.1 mass% or more; a natural immersion potential at 35°C of the film layer is more electronegative than -0.5 Vvs.NHE; and the film layer does not include an intermetallic compound composed of at least any element selected from the element group, and Zn, or when the film layer includes the intermetallic compound, a length along a longitudinal direction in a cross section in the longitudinal direction of the steel wire, of the intermetallic compound, is 1 μm or less.
[2] The plated steel wire according to [1], wherein the film layer contains 6 mass% or less of Co.
[3] The plated steel wire according to [1] or [2], wherein the film layer contains 5 mass% or less of Cr.
[4] The plated steel wire according to any one of [1] to [3], wherein the film layer contains 13 mass% or less of Cu.
[5] The plated steel wire according to any one of [1] to [4], wherein the film layer contains 9 mass% or less of Ni.
[6] The plated steel wire according to any one of [1] to [5], wherein the film layer contains 24 mass% or less of P.
[7] The plated steel wire according to any one of [1] to [6], wherein the film layer contains 40 mass% or less of Sn.
[8] The plated steel wire according to any one of [1] to [7], wherein the film layer contains 5 mass% or less of Mn.
[9] The plated steel wire according to any one of [1] to [8], wherein the film layer contains 5 mass% or less of Fe.
[10] The plated steel wire according to any one of [1] to [9], wherein the film layer includes the elements so that M represented in a following formula (1) is 6 or less.

$$M = M(Co) + M(Cr) + \{M(Cu)/2\} + \{M(Ni)/1.5\} + \{M(P)/4\} + M(Mn) + M(Fe) \ldots (1)$$

In the above formula (1), M(Co) is a content (mass%) of Co included in the film layer, M(Cr) is a content (mass%) of Cr included in the film layer, M(Cu) is a content (mass%) of Cu included in the film layer, M(Ni) is a content (mass%) of Ni included in the film layer, M(P) is a content (mass%) of P included in the film layer, M(Mn) is a content (mass%) of Mn included in the film layer, and M(Fe) is a content (mass%) of Fe included in the film layer.
[11] The plated steel wire according to [10], wherein the film layer includes the elements so that the M is not less than 0 nor more than 3.
[12] The plated steel wire according to any one of [1] to [11], wherein a natural immersion potential at 35°C of the film layer is not less than -0.8 Vvs.NHE nor more than -0.6 Vvs.NHE.
[13] The plated steel wire according to any one of [1] to [12], wherein an average thickness in a circumferential direction of the steel wire, of the film layer, is not less than 0.02 μm nor more than 4.0 μm.
[14] A steel cord including the plated steel wire according to any one of [1] to [13].
[15] A rubber-plated steel wire composite in which the plated steel wire according to any one of [1] to [13] and/or the steel cord according to [14] is/are embedded in rubber.

[Effect of the Invention]

According to the present invention as explained above, providing a Zn alloy plating film layer having sacrificial anticorrosive ability with respect to a steel wire and high corrosion resistance on a surface of the steel wire makes it possible to achieve both corrosion protection of a base steel wire and suppression of corrosion of the plating film layer even though a plating film thickness is small. As a result, according to the present invention, it is possible to suppress a deterioration in adhesiveness between a steel cord and rubber and suppress corrosion fatigue of the steel cord. Further, according to the present invention, the plating film layer can be formed by electroplating, so that the plating film thickness can be made small, resulting in not causing a weight increase of a plated steel wire due to the plating film layer. Moreover, according to the present invention, no presence of an intermetallic compound in such a state that a length along a longitudinal direction in a cross section in the longitudinal direction of the steel wire, of the intermetallic compound present in the plating film layer, is longer than a predetermined length makes it possible to suppress peeling or cracking of the plating film layer at a time of processing to a thin wire of the plated steel wire, and also suppress a fatigue fracture caused by these.

[Brief Description of the Drawings]

[FIG. 1] FIG. 1 is an explanatory view schematically illustrating a cross-sectional structure when one example of a plated steel wire 1 according to an embodiment of the present invention is taken along a radial direction of a steel wire 11.
[FIG. 2] FIG. 2 is an explanatory view schematically illustrating a partly cross-sectional structure when one example of the plated steel wire 1 according to the same embodiment is taken along a longitudinal direction of the steel wire 11.
[FIG. 3] FIG. 3 is an explanatory view schematically illustrating a partly cross-sectional structure when another example of the plated steel wire 1 according to the same embodiment is taken along the longitudinal direction of the steel wire 11.

[FIG. 4] FIG. 4 is an explanatory diagram schematically illustrating one example of a manufacturing process of the plated steel wire 1 according to the same embodiment.

[FIG. 5] FIG. 5 is an explanatory view schematically illustrating a partly cross-sectional structure when one example of a plated steel wire 3 according to a comparative example is taken along a longitudinal direction of a steel wire 11.

[Embodiments for Carrying out the Invention]

A preferred embodiment of the present invention will be explained in detail with reference to accompanying drawings below. Note that the embodiment indicated below does not limit the present invention. Further, components of such an embodiment include the one in which a substitution is possible and easy for what is called those skilled in the art, or substantially the same one. Moreover, what is called those skilled in the art can arbitrarily combine various forms included in the following embodiment within an obvious range.

<Regarding plated steel wire 1>

Hereinafter, a plated steel wire 1 according to the embodiment of the present invention will be explained in detail with reference to FIG. 1 to FIG. 3. FIG. 1 is an explanatory view schematically illustrating a cross-sectional structure when one example of the plated steel wire 1 according to this embodiment is taken along a radial direction of a steel wire 11, and FIG. 2 and FIG. 3 are explanatory views each schematically illustrating a partly cross-sectional structure when one example of the plated steel wire 1 according to this embodiment is taken along a longitudinal direction of the steel wire 11.

As schematically illustrated in FIG. 1 to FIG. 3, the plated steel wire 1 according to this embodiment is the plated steel wire (for example, an ultrathin plated steel wire) 1 provided with an alloy plating film layer 13 composed of a predetermined alloy on a surface of the steel wire (for example, an ultrathin steel wire or the like) 11. Note that the drawings illustrated in FIG. 1 to FIG. 3 do not illustrate roughness likely to be present on the surface of the steel wire 11 for convenience of drawing creation.

[Regarding steel wire 11]

As the steel wire 11 according to this embodiment, a wire rod having a tensile strength of 1000 MPa or more is preferably used, and a wire rod having a tensile strength of 2800 MPa or more is more preferably used. As long as the tensile strength is 1000 MPa, the plated steel wire (steel cord) can be preferably used as, for example, a reinforcing material to reinforce rubber of the above-mentioned tire, conveyor, and the like. Note that an upper limit of the tensile strength of the steel wire 11 is not particularly limited, and preferably as high as possible. Here, the tensile strength of the steel wire 11 can be measured by a tensile test compliant with JIS Z2241 (1998). Further, in a case of the steel cord, tensile strength can be measured by a tensile test compliant with JIS G3510 (1992).

As the steel wire 11 having the above-described tensile strength, there can be cited a high-carbon steel wire in which the content of carbon is approximately 0.8 mass% or more. A wire diameter of such a steel wire 11 is not particularly limited, but for example, the wire diameter (diameter) is about 0.05 mm to 0.4 mm.

[Regarding plating film layer 13]

The plating film layer 13 according to this embodiment is located on the surface of the steel wire 11 as illustrated in FIG. 1 and FIG. 2, and includes at least any element selected from an element group constituted of Co, Cr, Cu, Ni, P, Sn, Mn and Fe, and Zn. Further, the plating film layer 13 may include impurities. Here, the impurities are not the ones intentionally added as components of the plating film layer 13, but the ones mixed in a raw material or in a manufacturing process, and there can be cited Al, Mg, Si, Ti, B, S, N, C, Nb, Pb, Cd, Ca, Y, La, Ce, Sr, Sb, O, F, Cl, Zr, Ag, W and so on. Even though the impurities are present up to about 1 mass% in total relative to the mass of the entire plating film layer 13, such an effect to be obtained by the plating film layer 13 as explained below is not impaired.

By setting the content of each of the elements selected from the above-described element group (Co, Cr, Cu, Ni, P, Sn, Mn and Fe) included in the plating film layer 13 to 0.1 mass% or more, corrosion resistance of the plating film layer 13 itself can be improved. Note that by setting the total content of the elements selected from the above-described element group in the plating film layer 13 to be larger than 0.5 mass%, the effect of corrosion resistance improvement of the plating film layer 13 can be further increased, and by setting to 1.0 mass% or more, the effect of corrosion resistance improvement of the plating film layer 13 can be extremely increased.

A natural immersion potential at 35°C of the plating film layer 13 according to this embodiment is more electronegative than -0.5 V vs.NHE. In detail, when the natural immersion potential at 35°C of the plating film layer 13 is more electropositive than -0.5 V vs.NHE, too small potential difference between the steel and the plating film layer makes exhibition of sacrificial anticorrosive ability by the plating film layer 13 difficult, and the steel wire 11 corrodes. Thus, in this embodiment, in order to suppress corrosion of the steel wire 11, the natural immersion potential at 35°C of the plating film layer 13 is preferably -0.5 V vs.NHE. Moreover, the natural immersion potential at 35°C of the plating film layer 13 is more preferably set to -0.6 V vs.NHE or less, and further preferably set to -0.7 V vs.NHE or less, and thus, the corrosion of the steel wire 11 can be suppressed more. Further, from the viewpoints of workability and corrosion fatigue in the plated steel wire 1, the natural immersion potential at 35°C of the plating film layer 13 is preferably -0.8 V vs.NHE or more. Moreover, the natural immersion potential at 35°C of the plating film layer 13 is more preferably set to -0.78 V vs.NHE or more, and further preferably set to -0.77 V vs.NHE or more, and thus, the workability in the plated steel wire 1 can be increased more, and the corrosion fatigue can be avoided more.

Note that the natural immersion potential of the steel wire 11 or the plating film layer 13 can be confirmed by reading a potential when they are each immersed in a 3.0 mass% NaCl solution air-saturated under an environment of 35°C, for 60 seconds. Further, in a case of a rubber-plated steel wire composite in which the plated steel wire 1 or the steel cord including the plated steel wire 1 is embedded in rubber, measurement can be performed by dissolving and removing the rubber with a solvent capable of dissolving rubber, such as N-methyl-pyrrolidinone, and exposing the plated steel wire 1. Note that when some treatment is performed on an upper layer of the above-described plating film layer 13 in order to further improve adhesiveness between the plated steel wire 1 and the rubber, measurement is desirably performed after removing the above treatment layers.

The plating film layer 13 according to this embodiment may include intermetallic compounds 15 each composed of at least any element selected from the above-described element group (Co, Cr, Cu, Ni, P, Sn, Mn and Fe), and Zn, as illustrated in FIG. 3, and the plating film layer 13 does not preferably include the above-described intermetallic compound 15, as illustrated in FIG. 2. Further, when the plating film layer 13 includes the above-described intermetallic compound 15, a length along a longitudinal direction in a cross section in the longitudinal direction of the steel wire 11, of the intermetallic compound 15, is set to 1 $\mu$m or less. That is, in this embodiment, the intermetallic compound 15 is not continuously present up to 1 $\mu$m or more along the longitudinal direction in a layered shape or in a particulate shape in the plating film layer 13. Here, the continuous presence of the intermetallic compounds indicates that without the presence of a phase other than an intermetallic compound phase, such as a pure metal phase, between the intermetallic compounds, one or a plurality of intermetallic compounds are present up to 1 $\mu$m or more along a longitudinal direction in a cross section in the longitudinal direction of the steel wire 11. Note that at this time, a case where a plurality of intermetallic compounds are adjacently present is also regarded as continuity. Here, as the phase of the intermetallic compound, there can be exemplified a $\gamma_2$ phase, a $\gamma_1$ phase, a $\gamma$ phase, and a $\beta_1$ phase of Zn-Co, a $\theta$ phase of Zn-Cr, a $\beta$ phase, a $\beta'$ phase, a $\gamma$ phase, and an $\varepsilon$ phase of Zn-Cu, a $\delta$ phase, a $\gamma$ phase, a $\beta_1$ phase, and a $\beta$ phase of Zn-Ni, a $Zn_3P_2$ phase and a $ZnP_2$ phase of Zn-P, a $\zeta$ phase, a $\delta$ phase, a $\delta_1$ phase, a $\gamma$ phase, and an $\varepsilon$ phase of Zn-Mn, a $\zeta$ phase, a $\delta_1$ phase, a $\Gamma$ phase, and a $\Gamma_1$ phase of Zn-Fe, and so on, illustrated in phase diagrams. Further, besides these, a ternary alloy phase or the like may also be included. Further, when heat treatment is performed in order to remove stress in electrodeposits present in the plating film layer 13, an alloy of the element included in the plating film layer 13 and Fe included in the steel wire 11 is sometimes formed, but the here described intermetallic compound does not include such an alloy of the element and Fe included in the steel wire 11. Note that such a Fe alloy is present in an interface between the steel wire 11 and the plating film layer 13.

In this embodiment, no continuous presence of the intermetallic compound 15 in the longitudinal direction of the steel wire 11 in a layered shape or in a particulate shape in the plating film layer 13 makes it possible to suppress peeling or cracking of the plating film layer 13 when the plated steel wire 1 is processed to a thin wire. In detail, the intermetallic compound 15 is hard and poor in deformability, and therefore, when such an intermetallic compound is continuously present longer than 1 $\mu$m in the plating film layer 13, the intermetallic compound 15 cannot follow deformation of steel at the occasion of hard working such as wire drawing until the steel wire 11 comes to have a small diameter, thereby resulting in occurrence of cracking or a crack at a present location of the intermetallic compound 15 in the plating film layer 13. Accordingly, in this embodiment, in order to suppress the occurrence of such cracking or a crack, the intermetallic compound 15 is not made continuously present in a layered shape or in a particulate shape in the plating film layer 13. Note that in this embodiment, a length along a longitudinal direction in a cross section in the longitudinal direction of the steel wire 11, of the intermetallic compound 15, is preferable to be as small as possible, preferably set to 0.1 $\mu$m or less, and more preferably set to 0.02 $\mu$m or less. Moreover, it is further preferable that the intermetallic compound 15 is not present in the plating film layer 13.

Note that measurement of the presence/absence of the above-described intermetallic compound 15 in the plating film layer 13 can be performed by a cross-section observation using a FE-SEM-EDX (a field-emission scanning electron microscope with energy dispersive X-ray analyzer) after cutting a cross-section sample with a Cryo CP (Cross section Polisher) being a device in which the plating film layer 13 is difficult to damage due to heat.

Whether the intermetallic compound 15 is continuously present in the plating film layer 13 can be distinguished by producing a sample cross section with the above-mentioned Cryo CP, performing elemental analysis with the FE-SEM-EDX, and performing a comparison with compositions of intermetallic compound phases illustrated in the phase diagrams. Moreover, a length of the intermetallic compound distinguished in such a manner can be obtained from an image of the sample cross section.

When the plating film layer 13 according to this embodiment includes one element selected from an element group (Co, Cr, Cu, Ni, P, Mn and Fe), in the plating film layer 13, it is preferable that Co is not less than 0.1 mass% nor more than 6 mass%, Cr is not less than 0.1 mass% nor more than 5 mass%, Cu is not less than 0.1 mass% nor more than 13 mass%, Ni is not less than 0.1 mass% nor more than 9 mass%, P is not less than 0.1 mass% nor more than 24 mass%, Mn is not less than 0.1 mass% nor more than 5 mass%, and Fe is not less than 0.1 mass% nor more than 5 mass%. Thus, formation of the intermetallic compound 15 in the plating film layer 13 is made more difficult, and moreover, it is possible to achieve both corrosion protection of the steel wire 11 and suppression of corrosion of the plating film layer 13 even though a thickness of the plating film layer 13 is small. In the plating film layer 13, Co is more preferably 0.3 mass% or more, further preferably 0.5 mass% or more, more preferably 4 mass% or less, and further preferably 3 mass% or less. Cr is more preferably 0.5 mass% or more, further preferably 1.0 mass% or more, more preferably 4 mass% or less, and further preferably 3 mass% or less. Cu is more preferably 1 mass% or more, further preferably 3 mass% or more, more preferably 12 mass% or less, and further preferably 9 mass% or less. Ni is more preferably 0.5 mass% or more, further preferably 1 mass% or more, more preferably 5 mass% or less, and further preferably 4 mass% or less. P is more preferably 1 mass% or more, further preferably 3 mass% or more, more preferably 13 mass% or less, and further preferably 9 mass% or less. Mn is more preferably 0.3 mass% or more, further preferably 1 mass% or more, more preferably 4 mass% or less, and further preferably 2 mass% or less. Fe is more preferably 0.3 mass% or more, further preferably 0.7 mass% or more, more preferably 4 mass% or less, and further preferably 3 mass% or less.

Moreover, when the plating film layer 13 according to this embodiment includes Sn, in the plating film layer 13, Sn is preferably set to not less than 0.1 mass% nor more than 40 mass%. Thus, the natural immersion potential at 35°C can be set to -0.5 V vs.NHE or less, and moreover, it is possible to achieve both the corrosion protection of the steel wire 11 and the suppression of corrosion of the plating film layer 13 even though the thickness of the plating film layer 13 is small. Note that Sn contained in the plating film layer 13 is more preferably 1 mass% or more, further preferably 3 mass% or more, more preferably 35 mass% or less, and further preferably 15 mass% or less.

Moreover, when the plating film layer 13 according to this embodiment includes two or more elements selected from the element group (Co, Cr, Cu, Ni, P, Mn and Fe), the plating film layer 13 preferably includes the above-described elements so that M represented in the following formula (1) is not less than 0 nor more than 6. Thus, formation of the intermetallic compound 15 in the plating film layer 13 is made more difficult, and moreover, it is possible to achieve both the corrosion protection of the steel wire 11 and the suppression of corrosion of the plating film layer 13 even though the thickness of the plating film layer 13 is small. Note that the plating film layer 13 more preferably includes the above-described elements so that M represented in the following formula (1) is not less than 0 nor more than 3.

$$M = M(Co) + M(Cr) + \{M(Cu)/2\} + \{M(Ni)/1.5\} + \{M(P)/4\} + M(Mn) + M(Fe) \ldots (1)$$

In the above formula (1), M(Co) is the content (mass%) of Co included in the film layer, M(Cr) is the content (mass%) of Cr included in the film layer, M(Cu) is the content (mass%) of Cu included in the film layer, M(Ni) is the content (mass%) of Ni included in the film layer, M(P) is the content (mass%) of P included in the film layer, M(Mn) is the content (mass%) of Mn included in the film layer, and M(Fe) is the content (mass%) of Fe included in the film layer.

Note that the content of Zn included in the film layer 13 is not particularly limited as long as the natural immersion potential at 35°C of the film layer 13 is more electronegative than -0.5 Vvs.NHE, and the intermetallic compound which is composed of at least any element selected from the element group (Co, Cr, Cu, Ni, P, Mn and Fe), and Zn, and whose length along the longitudinal direction of the steel wire 11 exceeds 1 μm is not included. Normally, the content (mass%) of Zn is the largest of the elements included in the film layer 13, and may be, for example, 50% or more, 60% or more, 65% or more, 70% or more, or 80% or more.

An average thickness in a circumferential direction of the steel wire 11 in the plated steel wire 1, of the plating film layer 13 according to this embodiment, is 0.02 μm or more. By setting such a plating film thickness, the base steel wire 11 can be effectively protected from corrosion, and suppression of the corrosion fatigue caused by corrosion can be effectively attained. In this embodiment, an upper limit of the above-described thickness of the plating film layer 13 is not particularly limited, but preferably set to 4.0 μm or less in order to suppress a weight of the entire plated steel wire 1. Note that the above-described thickness of the plating film layer 13 is more preferably set to not less than 0.1 μm nor more than 3.0 μm, and further preferably set to not less than 0.2 μm nor more than 1.2 μm. Note that when the heat treatment is performed in order to remove the stress in electrodeposits present in the plating film layer 13, the alloy of the element included in the plating film layer 13 and Fe included in the steel wire 11 is sometimes formed, and such a Fe alloy layer is included in the thickness of the plating film layer 13. Moreover, when a base plating layer (whose illustration is omitted) is provided between the steel wire 11 and the plating film layer 13 to form an alloy of an element included in the base plating layer or Fe included in the steel wire 11, and the element included in the plating film layer 13, such an alloy layer is included in the thickness of the plating film layer 13. Further, in the plating film layer 13 according to this embodiment, a defect or a flaw such as a crack or a pinhole may be present.

A composition of the plating film layer 13 after being embedded in rubber can be measured by producing a C cross section with the device in which the plating film layer 13 is difficult to damage, such as the Cryo CP, and performing elemental analysis with the FE-SEM-EDX, a FE-EPMA, or a TEM-EDS. Further, the thickness of the plating film layer 13 can be obtained by measuring thicknesses of the largest portion and the smallest portion on the circumference of the obtained cross section and averaging them.

<Regarding steel cord>

A plurality of the above-mentioned plated steel wires 1 are preferably twisted to form a steel cord when embedded in rubber. Twisting the plurality of plated steel wires 1 makes it possible to increase strength, and further provide toughness with respect to deflection or deformability, as compared with a case of using the single plated steel wire 1. Further, in the above-described steel cord, without being limited to twisting a plurality of the above-mentioned plated steel wires 1, the twisting may be performed so as to dispose the above-described plated steel wires 1 in the outer peripheral portion of the steel cord more likely to corrode and dispose other steel wires in the central portion of the steel cord. Thus, it is possible to obtain the steel cord being unlikely to corrode and having high strength.

<Regarding rubber-plated steel wire composite>

A rubber-plated steel wire composite provided with desired capability can be obtained by embedding the above-mentioned plated steel wire 1 or the steel cord formed by twisting the plated steel wires 1 in a rubber composition. In detail, the above-mentioned steel cord is sandwiched in sheet-shaped rubber obtained by kneading a raw material compounding the rubber composition and carbon black, sulfur, zinc oxide, and other various additives, to be formed as a reinforcing belt structure. Thereafter, the one formed as a green tire by laminating tire composing members is set, pressed, and heated in a vulcanizer, and the rubber and the plated steel wires are bonded to each other simultaneously with crosslinking for exhibiting strength of the rubber. This makes it possible to manufacture such a rubber-plated steel wire composite as represented by the tire.

The kind of the rubber composition in which the above-mentioned plated steel wire 1 or the above-mentioned steel cord is embedded is not particularly limited, and for example, in general, well-known natural rubber or synthetic rubber can be used independently, or two or more of them can be mixed to be used. As the synthetic rubber, for example, there can be used diene-based rubber such as butadiene rubber, styrene-butadiene rubber, isoprene rubber, chloroprene rubber, or acrylonitrile-butadiene rubber, olefin-based rubber such as butyl rubber, ethylene-propylene rubber, ethylene-vinyl acetate rubber, chlorosulfonated polyethylene, or acrylic rubber, urethane rubber, fluororubber, polysulfide rubber, or the like.

Further, in the above-described rubber composition, a compounding agent to be normally used in rubber industry for improving and adjusting capability of rubber can be compounded appropriately with a normal compounding amount. Specifically, as the compounding agent, for example, there can be cited a filler such as carbon black or silica, a softening agent such as an aroma oil, vulcanization accelerators such as guanidines such as diphenylguanidine, thiazoles such as mercaptobenzothiazole, sulfenamides such as N,N'-dicyclohexyl-2-benzothiazolylsulfenamide, or thiurams such as tetramethylthiuram disulfide, a vulcanization supplement accelerator such as zinc oxide, an antioxidant such as amines such as poly(2,2,4-trimethyl-1,2-dihydroquinoline) or phenyl-$\alpha$-naphthylamine, or the like. Note that in this embodiment, even when such a compounding agent to be normally used in the rubber industry coexists in the rubber, it is possible to achieve both the corrosion protection of the steel wire 11 and the suppression of corrosion of the plating film layer 13.

Moreover, in the above-mentioned plated steel wire 1 or the above-mentioned steel cord, between the plating film layer 13 and the rubber, another film for further improving corrosion resistance and wire drawability, or another film for improving adhesiveness between the plated steel wire 1 or the steel cord and the rubber may be present. Such a film is not particularly limited if a film having a desired property, but for example, there can be cited a Cu film, a Sn film, a Cr film and an alloy thereof, or a phosphate film, a chromate film, a silane coupling agent, an organic resin film, or the like. Further, without being limited to these, other well-known films can also be applied. In addition, as necessary, it is also possible to apply a multilayer film obtained by combining two or more of the above-mentioned films.

As a resin component of the above-described organic resin film, for example, there is usable an epoxy-based resin, a urethane-based resin, a polyester-based resin, a phenol-based resin, a polyethersulfone-based resin, a melamine-alkyd-based resin, an acryl-based resin, a polyamide-based resin, a polyimide-based resin, a silicone-based resin, a polyvinyl acetate-based resin, a polyolefin-based resin, a polystyrene-based resin, a vinyl chloride-based resin, a vinyl acetate-based resin, a natural rubber resin, a synthetic rubber resin, or the like. At this time, in order to improve adhesiveness to the plating film layer 13 or the like, a silanol group or the like may be introduced to the above-described various resins. Further, for formation of a resin layer, these resins may be used independently, a mixture of these resins may be used, or a laminated structure of these resins may be formed. Moreover, in order to improve properties of these resins, a pigment or the like may be included.

As indicated above, in the plated steel wire 1, the steel cord obtained by twisting the plated steel wires 1, and the rubber-plated steel wire composite in which the plated steel wire 1 or the steel cord is embedded according to the embodiment of the present invention, in order to achieve both the corrosion protection of the base steel wire 11 and the suppression of corrosion of the plating film layer 13, and suppress peeling of the rubber and corrosion of the base steel wire 11 even though the thickness of the plating film layer 13 is small, the composition and the natural immersion potential of the plating film layer 13 are specified as mentioned above. As a result, according to the embodiment of the present invention, it is possible to achieve suppression of a deterioration in adhesiveness between the plated steel wire 1 or the steel cord and the rubber, and suppression of corrosion fatigue of the plated steel wire 1 or the steel cord. Moreover, in the embodiment of the present invention, the intermetallic compound 15 is not made present in such a state that a length along a longitudinal direction in a cross section in the longitudinal direction of the steel wire 11, of the intermetallic compound 15 present in the plating film layer 13, is longer than a predetermined length. As a result, according to the embodiment of the present invention, it is possible to suppress peeling or cracking of the plating film layer 13 at a time of processing to a thin wire of the plated steel wire 1, and also suppress a fatigue fracture caused by these.

<Manufacturing method of plated steel wire 1, steel cord, and rubber-plated steel wire composite>

The above has explained constitutions of the plated steel wire 1, the steel cord and the rubber-plated steel wire composite according to a preferred embodiment of the present invention in detail, and successively, a manufacturing method of the plated steel wire 1, the steel cord and the rubber-plated steel wire composite will be explained with reference to FIG. 4. FIG. 4 is an explanatory diagram schematically illustrating one example of a manufacturing process of the plated steel wire 1 and the steel cord according to this embodiment.

For example, a steel wire rod having a diameter of 5.5 mm is manufactured by hot rolling. Moreover, after pickling the obtained steel wire rod and removing scale (descaling), the steel wire rod having a diameter of 5.5 mm is formed as the one having a diameter of 1.0 to 1.8 mm by dry drawing to be wound in a coil shape.

Then, while the steel wire wound in a coil shape is unwound, it is subjected to material adjustment by performing final heat treatment at 800 to 900°C and cooling (what is called, patenting treatment) in order to obtain a uniform and fine pearlite structure. Thereafter, electrolytic degreasing with an alkaline solution and electrolytic pickling with acid using hydrochloric acid, sulfuric acid, or the like are performed.

Next, the above-mentioned plating film layer 13 is formed on a surface of the pickled steel wire. As a forming method of the plating film layer 13, an already-known electroplating method can be used. There can be used a sulfuric acid bath, a chloride bath, a cyanide bath, a pyrophosphate bath, a boric acid bath, a citric acid bath, other complex baths, and a combination of these, and so on as an electroplating bath. Further, the plating film layer 13 including a desired amount of Co, Cr, Cu, Ni, P, Sn, Mn and Fe can be formed by adding one or more single ions or complex ions selected from Co, Cr, Cu, Ni, P, Sn, Mn and Fe besides Zn ions to the plating bath. Further, in order to control stabilization of the ions in the plating bath and properties of the plating, an additive is further preferably added to the above-described plating bath.

Note that a composition, a temperature and a flow velocity of the above-described electroplating bath, and a current density, an energization pattern, and the like at a time of the plating may be appropriately selected so as to cause a desired plating composition, and are not particularly limited. Further, a thickness of the plating film layer 13 can be controlled by adjusting a current value and a time within a range of the current density causing the desired composition.

After forming the plating film layer 13 by the electroplating, heat treatment may be performed in order to remove stress in electrodeposits in the plating film layer 13 and improve workability at a time of wet drawing. In this embodiment, when the heat treatment is performed, Fe of the base steel wire 11 sometimes excessively diffuses in the plating film layer 13 to excessively form intermetallic compounds in high-temperature and long-time treatment, and therefore, a temperature is preferably 250°C to 400°C, and further preferably 250°C to 350°C. Further, a time of holding at temperatures of 250°C or higher is suitably shorter than 30 seconds, preferably shorter than 15 seconds, and more preferably shorter than 10 seconds.

After the formation of the plating film layer 13 as described above, the plated steel wire subjected to such electroplating treatment is wound in a coil shape again. Thereafter, while the plated steel wire wound in a coil shape is unwound, it is subjected to the wet drawing using a wet lubricant to obtain the plated steel wire 1 having desired wire diameter and strength, for example, having a diameter of 0.1 to 0.4 mm. Note that in this embodiment, the formation of the above-described plating film layer 13 may be performed after the wet drawing. However, in order to avoid strength decrease of the steel wire, the heat treatment is not preferably performed after the wet drawing.

Note that in this embodiment, in order to secure further improvement in corrosion resistance and improvement in wire drawability, and adhesiveness to rubber, a Cu film, a Sn film, a Cr film and an alloy film thereof, or an organic resin film or the like may be formed on a further upper layer of the plating film layer 13, and in this case, already-known methods can be used as forming methods of these upper layer films. For example, the Cu film, the Sn film, the Cr film and the alloy film thereof can be formed by the electroplating method, a phosphate film can be formed by immersion or a spray method, and a chromate film or a trivalent chromium-treated film can be formed by a coating method or an electrolytic method. Moreover, a silane coupling treatment film, a urethane resin film, an epoxy resin film, or an acrylic resin film can be formed by the coating method or the like. Further, the coating method is not particularly limited either, and the immersion method, the spray method, or the like can be used.

The formation of the above-mentioned upper layer film is desirably performed after final wire drawing when such an upper layer film having low spreadability as the phosphate film, the chromate film, the trivalent chromium-treated film or resin is formed. Further, because brass plating (Cu-Zn) and Cu-Sn plating in the Cu alloy film have high spreadability and work as lubricating coating at the occasion of final wire drawing by a wet method, the formation of these upper layer films is desirably performed before the final wire drawing.

The plated steel wire 1 obtained in the above-mentioned manner is provided for a wire twisting process. A plurality of the plated steel wires 1 are twisted at a predetermined pitch to be wound. Thus, the steel cord according to this embodiment can be obtained.

Successively, the manufacturing method of the rubber-plated steel wire composite using the above-mentioned plated steel wire 1 or steel cord will be explained.

The above-mentioned plated steel wire 1 or steel cord is covered with the rubber composition by a well-known method. Then, in order to improve strength of the rubber composition, the plated steel wire 1 or steel cord covered with the rubber composition is vulcanized at 170°C to 220°C for several minutes to several hours. As a vulcanizing agent to be used for the vulcanization, the well-known one can be used, and for example, there can be used the various ones such as sulfur and its congeneric elements (Se, Te), a sulfur-containing organic compound, an organic peroxide, a metal oxide (MgO, PbO, ZnO, or the like), organic polyvalent amine, a modified phenolic resin, or isocyanates. Further, at the occasion of vulcanization, for the purpose of shortening of vulcanization time, a reduction in vulcanization temperature, a decrease in the vulcanizing agent amount, and improved quality of rubber products, in addition to the vulcanizing agent, the vulcanization accelerator may be added.

Thus, the rubber-plated steel wire composite according to this embodiment can be formed.

According to the above-indicated manufacturing method according to the embodiment of the present invention, it is possible to obtain the plated steel wire 1, the steel cord and the rubber-plated steel wire composite which make it possible to achieve both the corrosion protection of the base steel wire 11 and the suppression of corrosion of the plating film layer 13, and suppress the peeling of the rubber and the corrosion of the base steel wire 11 even though the thickness of the plating film layer 13 is small. Moreover, according to the embodiment of the present invention, it is possible to obtain the plated steel wire 1, the steel cord and the rubber-plated steel wire composite which make it possible to suppress the peeling or the cracking of the plating film layer 13 at the time of processing to a thin wire of the plated steel wire 1, and also suppress the fatigue fracture caused by these because the intermetallic compound whose length along a longitudinal direction in a cross section in the longitudinal direction of the steel wire 11 exceeds 1 μm cannot be made present in the plating film layer 13.

[Examples]

Hereinafter, the effect of the present invention will be specifically explained by invention examples. Note that the contents of the present invention are not limited by the contents described in the below-indicated examples.

Steel containing C: 0.82 mass%, Si: 0.21 mass%, Mn: 0.42 mass%, P: 0.007 mass%, S: 0.016 mass%, and the balance being Fe and impurities was melted to be rolled to a steel wire rod having a diameter of 5.5 mm. The obtained steel wire rod was pickled to remove scale, and thereafter subjected to wire drawing to a wire diameter of 1.8 mm. This drawn steel wire was heated at 950°C for two minutes in a heating furnace as final heating treatment to be austenitized, thereafter being rapidly cooled to 600°C at a cooling rate of 100°C/s and held at the temperature for ten seconds.

The obtained steel wire was subjected continuously to electrolytic degreasing with an alkaline solution and electrolytic pickling with a sulfuric acid, and subjected to plating indicated in the following Table 1. A Zn plating film (Table 1 No. 1), Zn-Co plating films (Table 1 No. 3 to 7), Zn-Ni plating films (Table 1 No. 17 to 21), Zn-P plating films (Table 1 No. 22 to 27), Zn-Mn plating films (Table 1 No. 33 to 37), Zn-Fe plating films (Table 1 No. 38 to 42), Zn-Co-Ni plating films (Table 1 No. 43 to 44), Zn-Ni-P plating films (Table 1 No. 47 to 48), and a Zn-Ni-Fe-Co plating film (Table 1 No. 49) were formed by using plating baths obtained by adjusting concentrations and pHs of a zinc sulfate heptahydrate, a cobalt sulfate heptahydrate, a nickel sulfate hexahydrate, a sodium hypophosphite monohydrate, a manganese sulfate monohydrate, and an iron (II) sulfate heptahydrate so that average thicknesses of plating film layers and a Co concentration, a Ni concentration, a P concentration, a Mn concentration, and a Fe concentration in the plating films after wire drawing became thicknesses and concentrations in Table 1, and adjusting current density.

Zn-Cr plating films (Table 1 No. 8 to 11) and Zn-Cr-Fe plating films (Table 1 No. 45 to 46) were formed by using plating baths obtained by adjusting concentrations and pHs of a zinc sulfate heptahydrate, a chromium (III) chloride hexahydrate, and an iron (II) sulfate heptahydrate so that average thicknesses of plating film layers and a Cr concentration and a Fe concentration in the plating films after the wire drawing became thicknesses and concentrations in Table 1, and adjusting current density.

Zn-Cu plating films (Table 1 No. 2, 12 to 16) and Zn-Sn plating films (Table 1 No. 28 to 32) were formed by using plating baths obtained by adjusting concentrations and pHs of a zinc pyrophosphate trihydrate and a copper pyrophosphate tetrahydrate so that average thicknesses of plating film layers and a Cu concentration and a Sn concentration of the plating film layers after the wire drawing became thicknesses and concentrations in Table 1, and adjusting current density.

The obtained steel wire was subjected continuously to electrolytic degreasing with the alkaline solution and electrolytic pickling with the sulfuric acid, and subjected to plating indicated in the following Table 2. Zn-Co-Fe plating films (Table 2 No. 50 to 51, 62 to 63), Zn-Cr-Fe plating films (Table 2 No. 52 to 53, 64 to 65), Zn-Cu-Fe plating films (Table 2 No. 54 to 55, 66 to 67), Zn-Ni-Fe plating films (Table 2 No. 56 to 57, 68 to 69), Zn-P-Fe plating films (Table 2 No. 58 to 59, 70 to 71), and Zn-Sn-Fe plating films (Table 2 No. 60 to 61, 72 to 73), in each of which a composition excluding Fe was intended to become a composition ratio and a thickness described in Table 2, after forming the Zn-Co plating films, the Zn-Cr plating films, the Zn-Cu plating films, the Zn-Ni plating films, the Zn-P plating films, and the Zn-Sn plating films in a manner similar to the above-mentioned Zn-Co plating films and the like in Table 1 respectively, were formed by performing heat treatment for removing stress in electrodeposits and improving workability at a time of wet drawing, and diffusing Fe from base steel wires.

Note that general reagents were used as all the above-described reagents.

Further, in the heat treatment for removing stress in electrodeposits and improving workability at the time of wet drawing, an IH (Induction Heating) furnace was used, and holding for three seconds was performed at an output of 15 kW to increase temperature to 300°C, thereafter being allowed to cool.

Thereafter, the obtained plated steel wires were each subjected to wire drawing by wet drawing using a wet lubricant so that a wire diameter became 0.1 to 0.4 mm, thereby manufacturing plated steel wires.

Compositions of the plating film layers, presence/absence and continuity of an intermetallic compound, and thicknesses of the plating film layers were obtained by taking samples from the plated steel wires and observing and measuring cross-section samples produced by a Cryo CP with a FE-SEM-EDX. The following Table 1 to Table 2 present the results. Note that regarding the samples, when the intermetallic compound was present in the plating film layers, a case where a length along a longitudinal direction in a cross section in the longitudinal direction of the steel wire, of the intermetallic compound, was 1 $\mu$m or less was judged as discontinuity, and a case where the length was more than 1 $\mu$m was judged as continuity.

As natural immersion potentials of the obtained plated steel wires, a silver-silver chloride electrode was used for a reference electrode, and the potentials when they were immersed in a 3.0 mass% NaCl solution air-saturated under an environment of 35°C, for 60 seconds were read. The following Table 1 to Table 2 present the results.

Wire drawability was evaluated by the number of fractures when the plated steel wire corresponding to 10 kg of each of the plated steel wires in which the above-mentioned plating film layers were formed on the steel wires each having a diameter of 1.8 mm was subjected to wet drawing in a standard pass schedule so as to become a diameter of 0.4 mm. The one capable of being subjected to the wire drawing without fracture was regarded as A, the one subjected to one-time fracture was regarded as B, the one subjected to two or more-time fractures was regarded as C, the ones having B or more were regarded as acceptance. Table 1 to Table 2 present the results.

Moreover, the four plated steel wires were twisted at a 5 mm pitch to be formed as a steel cord, which was set in a die and embedded in a rubber composition presented in the following Table 3, and vulcanization was performed by hot pressing in which heating was performed at 160°C for 30 minutes, to produce evaluation samples.

Regarding each of the evaluation samples, by using the one cut into by a cutter to the extent of exposing the steel cord in a direction orthogonal to the steel cord at the center of the sample, adhesiveness before and after deterioration was evaluated. In detail, by a tensile testing device, a pulling force when the steel cord was pulled out of the rubber composition in the evaluation sample subjected to the cutting process was measured, and initial adhesiveness was evaluated by a maximum pulling force. The one having a maximum pulling force of less than 60% of brass plating was evaluated as C, the one having a maximum pulling force of 60% or more and less than 100% of the brass plating was evaluated as B, the one having a maximum pulling force of 100% or more of the brass plating was evaluated as A, and the ones having B or more were regarded as acceptance.

Further, as the adhesiveness after deterioration, when a pulling force when the steel cord was pulled out of the rubber composition in the evaluation sample subjected to the cutting process after the deterioration process was measured, and the pulling force before the deterioration process was set to 100, the one having the pulling force after the deterioration process of less than 50 was regarded as C, the one having the pulling force after the deterioration process of 50 or more and less than 75 was regarded as B, the one having the pulling force after the deterioration process of 75 or more was regarded as A, and the ones having B or more were regarded as acceptance. In addition, the deterioration process was performed by holding the evaluation sample in a thermo-hygrostat at a relative humidity of 95% and a temperature of 80°C for 300 hr. Table 1 to Table 2 present the results.

Corrosion fatigue was evaluated regarding each of the obtained plated steel wires by immersing an end of a curvature portion by 20 mm in a 0.1% NaCl aqueous solution based on a rotating bending fatigue test of a stress loading method, and performing a corrosion fatigue resistance test at the number of rotations of 3000 rpm. The evaluation of the corrosion fatigue, in which the number of rotations until a fracture of a brass-plated plated steel wire occurred was set as a life, was indicated by an index when the life was set to 100, 100 or less were regarded as C, 101 to 130 were regarded as B, more than 130 were regarded as A, and B or more were regarded as acceptance. Table 1 to Table 2 present the results.

[Table 1]

| No. | PLATING FILM LAYER | | | | | | | | | EVALUATION | | | | REMARK |
|---|---|---|---|---|---|---|---|---|---|---|---|---|---|---|
| | SECOND ELEMENT | | THIRD ELEMENT | | THICKNESS AFTER WIRE DRAWING μm | NATURAL IMMERSION POTENTIAL V vs.NHE | INTERMETALLIC COMPOUND | M | | WIRE DRAWING | INITIAL ADHESIVENESS | ADHESIVENESS AFTER DETERIORATION | CORROSION FATIGUE | |
| | | CONCENTRATION MASS% | | CONCENTRATION MASS% | | | | | | | | | | |
| 1 | - | - | - | - | 10 | -0.77 | ABSENCE | - | | A | B | C | A | COMPARATIVE EXAMPLE |
| 2 | Cu | 67 | - | - | 0.3 | 0.15 | DISCONTINUITY | 67 | | A | A | C | C | COMPARATIVE EXAMPLE |
| 3 | Co | 0.1 | - | - | 05 | -0.77 | ABSENCE | 0.1 | | A | B | B | A | EXAMPLE |
| 4 | Co | 0.5 | - | - | 05 | -0.77 | ABSENCE | 0.5 | | A | B | A | A | EXAMPLE |
| 5 | Co | 3 | - | - | 02 | -0.75 | ABSENCE | 3 | | A | B | A | A | EXAMPLE |
| 6 | Co | 5 | - | - | 0.4 | -0.74 | ABSENCE | 5 | | B | B | A | B | EXAMPLE |
| 7 | Co | 12 | - | - | 0.8 | -0.70 | CONTINUITY | 12 | | C | B | A | C | COMPARATIVE EXAMPLE |
| 8 | Cr | 0.1 | - | - | 07 | -0.77 | ABSENCE | 0.1 | | A | B | B | A | EXAMPLE |
| 9 | Cr | 2 | - | - | 02 | -0.77 | ABSENCE | 2 | | A | B | A | A | EXAMPLE |
| 10 | Cr | 4 | - | - | 08 | -0.76 | ABSENCE | 4 | | B | B | A | B | EXAMPLE |
| 11 | Cr | 8 | - | - | 0.8 | -0.76 | CONTINUITY | 8 | | C | B | A | C | COMPARATIVE EXAMPLE |
| 12 | Cu | 0.1 | - | - | 0.1 | -0.76 | ABSENCE | 0.05 | | A | B | B | A | EXAMPLE |
| 13 | Cu | 3 | - | - | 0.3 | -0.74 | ABSENCE | 15 | | A | B | A | A | EXAMPLE |
| 14 | Cu | 7 | - | - | 0.8 | -0.71 | ABSENCE | 35 | | A | B | A | A | EXAMPLE |
| 15 | Cu | 12 | - | - | 02 | -0.66 | ABSENCE | 5 | | B | B | A | B | EXAMPLE |

(continued)

| No. | PLATING FILM LAYER | | | | | | | | EVALUATION | | | | REMARK |
|---|---|---|---|---|---|---|---|---|---|---|---|---|---|
| | SECOND ELEMENT | | THIRD ELEMENT | | THICKNESS AFTER WIRE DRAWING μm | NATURAL IMMERSION POTENTIAL V vs.NHE | INTERMETALLIC COMPOUND | M | WIRE DRAWING | INITIAL ADHESIVENESS | ADHESIVENESS AFTER DETERIORATION | CORROSION FATIGUE | |
| | | CONCENTRATION MASS% | | CONCENTRATION MASS% | | | | | | | | | |
| 16 | Cu | 14 | - | - | 0.7 | -0.64 | CONTINUITY | 7 | C | B | A | C | COMPARATIVE EXAMPLE |
| 17 | Ni | 0.1 | - | - | 02 | -0.77 | ABSENCE | 0.07 | A | B | B | A | EXAMPLE |
| 18 | Ni | 2 | - | - | 0.5 | -0.76 | ABSENCE | 1.33 | A | B | A | A | EXAMPLE |
| 19 | Ni | 4 | - | - | 0.7 | -0.75 | ABSENCE | 2.67 | A | B | A | A | EXAMPLE |
| 20 | Ni | 6 | - | - | 0.7 | -0.74 | ABSENCE | 4 | B | B | A | B | EXAMPLE |
| 21 | Ni | 10 | - | - | 0.4 | -0.72 | CONTINUITY | 6.67 | C | B | A | C | COMPARATIVE EXAMPLE |
| 22 | P | 0.1 | - | - | 05 | -0.77 | ABSENCE | 0.025 | A | B | B | A | EXAMPLE |
| 23 | P | 3 | - | - | 08 | -0.76 | ABSENCE | 0.75 | A | B | A | A | EXAMPLE |
| 24 | P | 9 | - | - | 0.3 | -0.77 | ABSENCE | 2.25 | A | B | A | A | EXAMPLE |
| 25 | P | 13 | - | - | 06 | -0.77 | ABSENCE | 3 25 | B | B | A | B | EXAMPLE |
| 26 | P | 23 | - | - | 05 | -0.76 | ABSENCE | 5.75 | B | B | A | B | EXAMPLE |
| 27 | P | 30 | - | - | 0.1 | -0.77 | CONTINUITY | 75 | C | B | A | C | COMPARATIVE EXAMPLE |
| 28 | Sn | 0.1 | - | - | 03 | -0.77 | ABSENCE | - | A | B | B | A | EXAMPLE |
| 29 | Sn | 3 | - | - | 08 | -0.75 | ABSENCE | - | A | B | A | A | EXAMPLE |
| 30 | Sn | 11 | - | - | 01 | -0.70 | ABSENCE | - | A | B | A | A | EXAMPLE |
| 31 | Sn | 35 | - | - | 02 | -0.55 | ABSENCE | - | A | B | A | A | EXAMPLE |

(continued)

| No. | PLATING FILM LAYER | | | | | | | | EVALUATION | | | | REMARK |
|---|---|---|---|---|---|---|---|---|---|---|---|---|---|
| | SECOND ELEMENT | | THIRD ELEMENT | | THICKNESS AFTER WIRE DRAWING μm | NATURAL IMMERSION POTENTIAL V vs.NHE | INTERMETALLIC COMPOUND | M | WIRE DRAWING | INITIAL ADHESIVENESS | ADHESIVENESS AFTER DETERIORATION | CORROSION FATIGUE | |
| | | CONCENTRATION MASS% | | CONCENTRATION MASS% | | | | | | | | | |
| 32 | Sn | 60 | - | - | 0.4 | -0.46 | ABSENCE | - | A | B | C | c | COMPARATIVE EXAMPLE |
| 33 | Mn | 0.3 | - | - | 06 | -0.77 | ABSENCE | 0.3 | A | B | B | A | EXAMPLE |
| 34 | Mn | 1.3 | - | - | 0.5 | -0.78 | ABSENCE | 1. 3 | A | B | A | A | EXAMPLE |
| 35 | Mn | 2 | - | - | 0.2 | -0.78 | ABSENCE | 2 | A | B | B | A | EXAMPLE |
| 36 | Mn | 4 | - | - | 1.2 | -0.79 | ABSENCE | 4 | B | B | A | B | EXAMPLE |
| 37 | M n | 16 | - | - | 0.8 | -0.84 | CONTINUITY | 16 | C | B | A | C | COMPARATIVE EXAMPLE |
| 38 | Fe | 0.6 | - | - | 0.2 | -0.77 | ABSENCE | 0.6 | A | B | B | A | EXAMPLE |
| 39 | Fe | 0.9 | - | - | 04 | -0.77 | ABSENCE | 0.9 | A | B | A | A | EXAMPLE |
| 40 | Fe | 3 | - | - | 0.3 | -0.76 | ABSENCE | 3 | A | B | B | A | EXAMPLE |
| 41 | Fe | 5 | - | - | 0.2 | -0.75 | ABSENCE | 5 | B | B | A | B | EXAMPLE |
| 42 | Fe | 18 | - | - | 0.6 | -0.71 | CONTINUITY | 18 | C | B | A | C | COMPARATIVE EXAMPLE |
| 43 | Co | 1 | Ni | 2 | 08 | -0.75 | ABSENCE | 2.33 | A | B | A | A | EXAMPLE |
| 44 | Co | 3 | Ni | 1 | 03 | -0.74 | ABSENCE | 3.67 | A | B | A | A | EXAMPLE |
| 45 | Cr | 2 | Fe | 2 | 02 | -0.76 | ABSENCE | 4 | A | B | A | A | EXAMPLE |
| 46 | Cr | ' | Fe | 1 | 0.2 | -0.77 | ABSENCE | 2 | A | B | A | A | EXAMPLE |
| 47 | Ni | 2 | P | 8 | 03 | -0.76 | ABSENCE | 3.33 | A | B | A | A | EXAMPLE |
| 48 | Ni | 3 | P | 8 | 0.7 | -0.76 | ABSENCE | 4 | A | B | A | A | EXAMPLE |

(continued)

| No. | PLATING FILM LAYER | | | | | | | | EVALUATION | | | | REMARK |
|---|---|---|---|---|---|---|---|---|---|---|---|---|---|
| | SECOND ELEMENT | | THIRD ELEMENT | | THICKNESS AFTER WIRE DRAWING μm | NATURAL IMMERSION POTENTIAL V vs.NHE | INTERMETALLIC COMPOUND | M | WIRE DRAWING | INITIAL ADHESIVENESS | ADHESIVENESS AFTER DETERIORATION | CORROSION FATIGUE | |
| | | CONCENTRATION MASS% | | CONCENTRATION MASS% | | | | | | | | | |
| 49 | Ni | 2 | Fe<br>Co | 0.3<br>0.5 | 0.3 | -0. 75 | ABSENCE | 2.13 | A | B | A | A | EXAMPLE |

[Table 2]

| No. | PLATING FILM LAYER | | | | | | | | EVALUATION | | | | REMARK |
|---|---|---|---|---|---|---|---|---|---|---|---|---|---|
| | SECOND ELEMENT | | THIRDELEMENT | | THICKNESS AFTER WIRE DRAWING $\mu m$ | NATURAL IMMERSION POTENTIAL V vs.NHE | INTERMETALLIC COMPOUND | M | WIRE DRAWING | INITIAL ADHESIVENESS | ADHESIVENESS AFTER DETERIORATION | CORROSION FATIGUE | |
| | | CONCENTRATION MASS% | | CO NCENTRATION MASS% | | | | | | | | | |
| 50 | Co | 3 | Fe | 1 | 04 | -0.76 | DISCONTINUITY | 4 | A | B | A | A | EXAMPLE |
| 51 | Co | 5 | Fe | 1 | 03 | -0.75 | DISCONTINUITY | 6 | A | B | A | A | EXAMPLE |
| 52 | Cr | 2 | Fe | 2 | 02 | -0.77 | DISCONTINUITY | 4 | A | B | A | A | EXAMPLE |
| 53 | Cr | 4 | Fe | 1 | 03 | -0.76 | DISCONTINUITY | 4.3 | A | B | A | A | EXAMPLE |
| 54 | Cu | 3 | Fe | 1 | 03 | -0.74 | DISCONTINUITY | 2.5 | A | B | A | A | EXAMPLE |
| 55 | Cu | 7 | Fe | 1 | 03 | -071 | DISCONTINUITY | 4.5 | A | B | A | A | EXAMPLE |
| 56 | Ni | 2 | Fe | 1 | 04 | -0.76 | DISCONTINUITY | 2.33 | A | B | A | A | EXAMPLE |
| 57 | Ni | 4 | Fe | 1 | 04 | -0.75 | DISCONTINUITY | 3.67 | A | B | A | A | EXAMPLE |
| 58 | P | 9 | Fe | 1 | 05 | -0.77 | DISCONTINUITY | 3.25 | A | B | A | A | EXAMPLE |
| 59 | P | 13 | Fe | 2 | 0.2 | -0.77 | DISCONTINUITY | 5.25 | A | B | A | A | EXAMPLE |
| 60 | Sn | 3 | Fe | 1 | 03 | -0.75 | DISCONTINUITY | 1 | A | B | A | A | EXAMPLE |
| 61 | Sn | 11 | Fe | 0 | 06 | -0.70 | DISCONTINUITY | - | A | B | A | A | EXAMPLE |
| 62 | Co | 3 | Fe | 0 | 06 | -0.76 | DISCONTINUITY | 3 | A | B | A | A | EXAMPLE |

(continued)

| No. | PLATING FILM LAYER | | | | | | | | M | EVALUATION | | | | REMARK |
|---|---|---|---|---|---|---|---|---|---|---|---|---|---|---|
| | SECOND ELEMENT | | THIRDELEMENT | | THICKNESS AFTER WIRE DRAWING $\mu m$ | NATURAL IMMERSION POTENTIAL V vs.NHE | INTERMETALLIC COMPOUND | | | WIRE DRAWING | INITIAL ADHESIVENESS | ADHESIVENESS AFTER DETERIORATION | CORROSION FATIGUE | |
| | | CONCENTRATION MASS% | | CO NCENTRATION MASS% | | | | | | | | | | |
| 63 | Co | 5 | Fe | 1 | 03 | -0.75 | DISCONTINUITY | | 6 | A | B | A | A | EXAMPLE |
| 64 | Cr | 2 | Fe | 1 | 03 | -0.77 | DISCONTINUITY | | 3 | A | B | A | A | EXAMPLE |
| 65 | Cr | 4 | Fe | 0 | 05 | -0.76 | DISCONTINUITY | | 4 | A | B | A | A | EXAMPLE |
| 66 | Cu | 3 | Fe | 6 | 02 | -0.74 | DISCONTINUITY | | 75 | A | B | B | B | EXAMPLE |
| 67 | Cu | 7 | Fe | 5 | 0.5 | -0.71 | DISCONTINUITY | | 8.5 | A | B | B | B | EXAMPLE |
| 68 | Ni | 2 | Fe | 5 | 0.3 | -0.76 | DISCONTINUITY | | 6.33 | A | B | B | A | EXAMPLE |
| 69 | Ni | 4 | Fe | 2 | 0.9 | -0.75 | DISCONTINUITY | | 4.66 | A | B | A | A | EXAMPLE |
| 70 | P | 9 | Fe | 5 | 04 | -0.77 | DISCONTINUITY | | 7.25 | A | B | B | B | EXAMPLE |
| 71 | P | 13 | Fe | 5 | 0.5 | -0.77 | DISCONTINUITY | | 825 | A | B | B | B | EXAMPLE |
| 72 | Sn | 3 | Fe | 4 | 07 | -0.75 | DISCONTINUITY | | 4 | A | B | A | A | EXAMPLE |
| 73 | Sn | 11 | Fe | 6 | 02 | -0.70 | DISCONTINUITY | | 6 | A | B | A | A | EXAMPLE |

[Table 3]

| RUBBER COMPOSITION | |
|---|---|
| COMPOUNDING AGENT | COMPOUNDING RATIO (phr) |
| NATURAL RUBBER | 100 |
| SRF CARBON | 50 |
| ANTIOXIDANT | 1 |
| ZINC OXIDE | 8 |
| STEARIC ACID | 2 |
| SULFUR | 5 |
| CROSSUNKING ACCELERATOR | 0.3 |
| COBALT NAPHTHENATE | 3 |
| phr: COMPOUNDING RATIO RELATIVE TO 100 PARTS BY MASS OF RUBBER (parts per hundred rubber)<br>NATURAL RUBBER: RSS#1 (RIBBED·SMOKED·SHEET RUBBER FIRST CLASS)<br>SRF CARBON: MANUFACTURED BY TOKAI CARBON. TRADE NAME: SEAST G-S<br>STEARIC ACID: ADEKA FATTY ACID SA-400<br>ANTIOXIDANT: MANUFACTURED BY OUCHI SHINKO CHEMICAL INDUSTRIAL CO., LTD.. TRADE NAME: NOC-RAC 810NA<br>CROSSLINKING ACCELERATOR: OUCHI SHINKO CHEMICAL INDUSTRIAL CO., LTD., TRADE NAME: NOCCELER CZ | |

According to Table 1 to Table 2, any of the examples, in which any of the wire drawability, the adhesiveness after deterioration, and the corrosion fatigue was improved, resulted in acceptance. That is, it can be said that any of the plated steel wire, the steel cord including the plated steel wire, and the rubber-plated steel wire composite in which the plated steel wire or the steel cord was embedded in rubber according to the examples had good wire drawability, and suppressed corrosion of the steel wire and progress of the corrosion, thereby making it possible to suppress a deterioration in adhesiveness to rubber and the corrosion fatigue.

In contrast to this, any of the comparative examples did not satisfy at least one of the wire drawability, the adhesiveness after deterioration, and the corrosion fatigue. That is, the plated steel wire, the steel cord including the plated steel wire, and the rubber-plated steel wire composite in which the plated steel wire or the steel cord was embedded in rubber according to the comparative examples also included a case where it was not possible to say that the wire drawability was good, and moreover, it cannot be said that any of them suppressed corrosion of the steel wire and progress of the corrosion, thereby making it possible to suppress a deterioration in adhesiveness to rubber and the corrosion fatigue.

Preferred embodiments of the present invention have been described above with reference to the accompanying drawings in detail, but the present invention is not limited to the embodiments. It should be understood that various changes and modifications are readily apparent to those having ordinary knowledge in the field of the technology to which the present invention belongs within the scope of the technical spirit as set forth in the claims, and these should also be covered by the technical scope of the present invention.

[Explanation of Codes]

| | |
|---|---|
| 1, 3 | plated steel wire |
| 11 | steel wire |
| 13 | plating film layer |
| 15 | intermetallic compound |

## Claims

1. A plated steel wire comprising
a film layer located on a surface of a steel wire and including at least any element selected from an element group constituted of Co, Cr, Cu, Ni, P, Sn, Mn and Fe, and Zn, wherein:

   a content of each of the elements selected from the element group in the film layer is 0.1 mass% or more;
   a natural immersion potential at 35°C of the film layer is more electronegative than -0.5 Vvs.NHE; and
   the film layer does not include an intermetallic compound composed of at least any element selected from the element group, and Zn, or
   when the film layer includes the intermetallic compound, a length along a longitudinal direction in a cross section in the longitudinal direction of the steel wire, of the intermetallic compound, is 1 $\mu$m or less.

2. The plated steel wire according to claim 1, wherein the film layer contains 6 mass% or less of Co.

3. The plated steel wire according to claim 1 or 2, wherein the film layer contains 5 mass% or less of Cr.

4. The plated steel wire according to any one of claims 1 to 3, wherein the film layer contains 13 mass% or less of Cu.

5. The plated steel wire according to any one of claims 1 to 4, wherein the film layer contains 9 mass% or less of Ni.

6. The plated steel wire according to any one of claims 1 to 5, wherein the film layer contains 24 mass% or less of P.

7. The plated steel wire according to any one of claims 1 to 6, wherein the film layer contains 40 mass% or less of Sn.

8. The plated steel wire according to any one of claims 1 to 7, wherein the film layer contains 5 mass% or less of Mn.

9. The plated steel wire according to any one of claims 1 to 8, wherein the film layer contains 5 mass% or less of Fe.

10. The plated steel wire according to any one of claims 1 to 9, wherein the film layer includes the elements so that M represented in a following formula (1) is 6 or less.

$$M = M(Co) + M(Cr) + \{M(Cu)/2\} + \{M(Ni)/1.5\} + \{M(P)/4\} + M(Mn) + M(Fe) \quad ... (1)$$

   In the above formula (1), M(Co) is a content (mass%) of Co included in the film layer, M(Cr) is a content (mass%) of Cr included in the film layer, M(Cu) is a content (mass%) of Cu included in the film layer, M(Ni) is a content (mass%) of Ni included in the film layer, M(P) is a content (mass%) of P included in the film layer, M(Mn) is a content (mass%) of Mn included in the film layer, and M(Fe) is a content (mass%) of Fe included in the film layer.

11. The plated steel wire according to claim 10, wherein the film layer includes the elements so that the M is not less than 0 nor more than 3.

12. The plated steel wire according to any one of claims 1 to 11, wherein a natural immersion potential at 35°C of the film layer is not less than -0.8 Vvs.NHE nor more than -0.6 Vvs.NHE.

13. The plated steel wire according to any one of claims 1 to 12, wherein an average thickness in a circumferential direction of the steel wire, of the film layer, is not less than 0.02 $\mu$m nor more than 4.0 $\mu$m.

14. A steel cord including the plated steel wire according to any one of claims 1 to 13.

15. A rubber-plated steel wire composite in which the plated steel wire according to any one of claims 1 to 13 and/or the steel cord according to claim 14 is/are embedded in rubber.

FIG.1

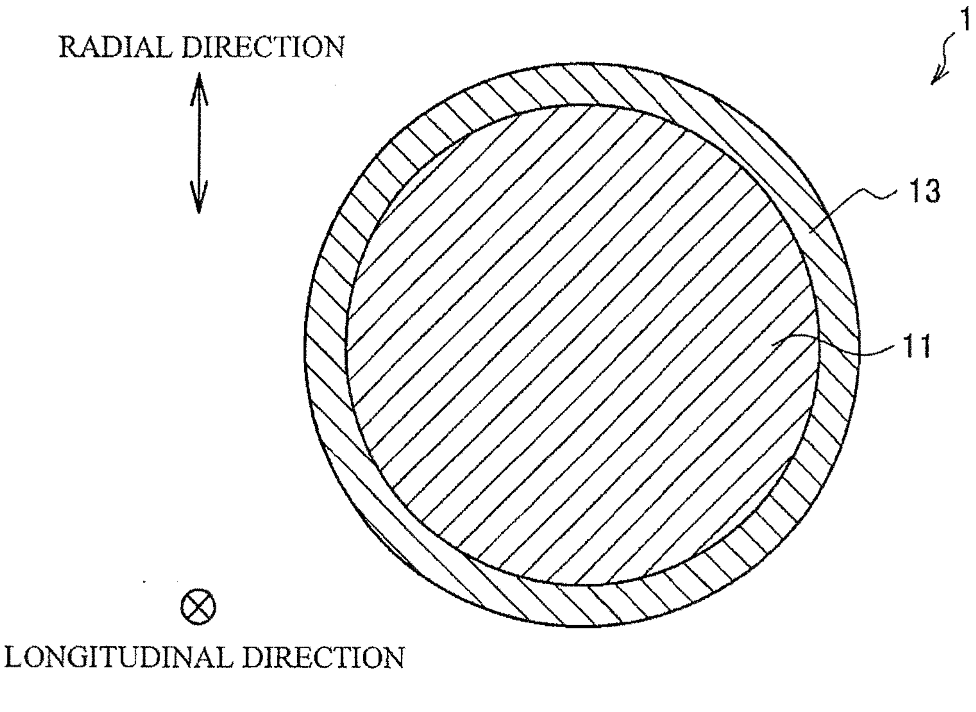

FIG.2

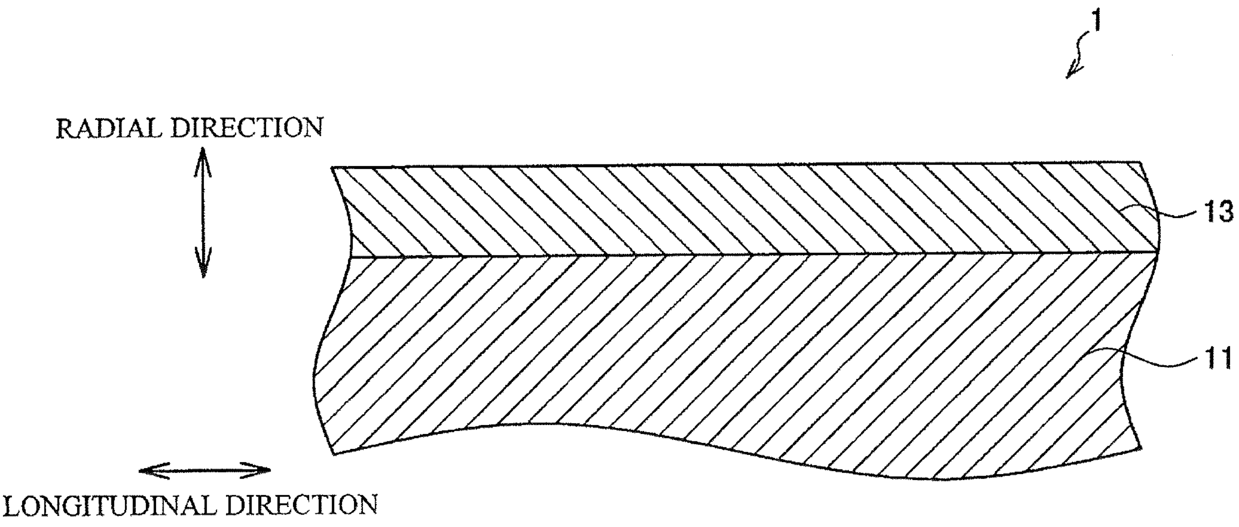

FIG.3

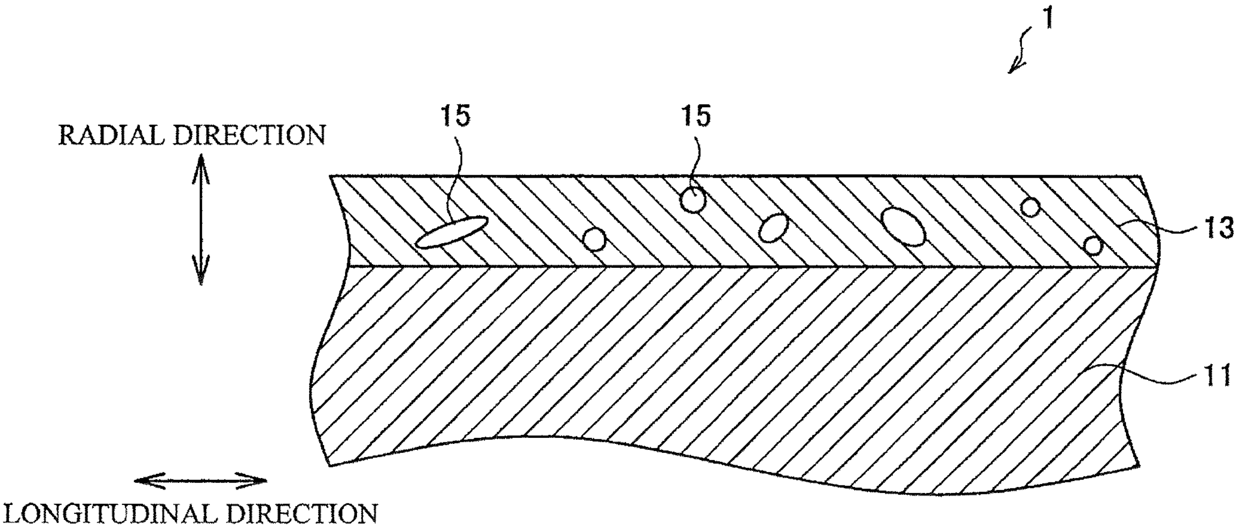

FIG.4

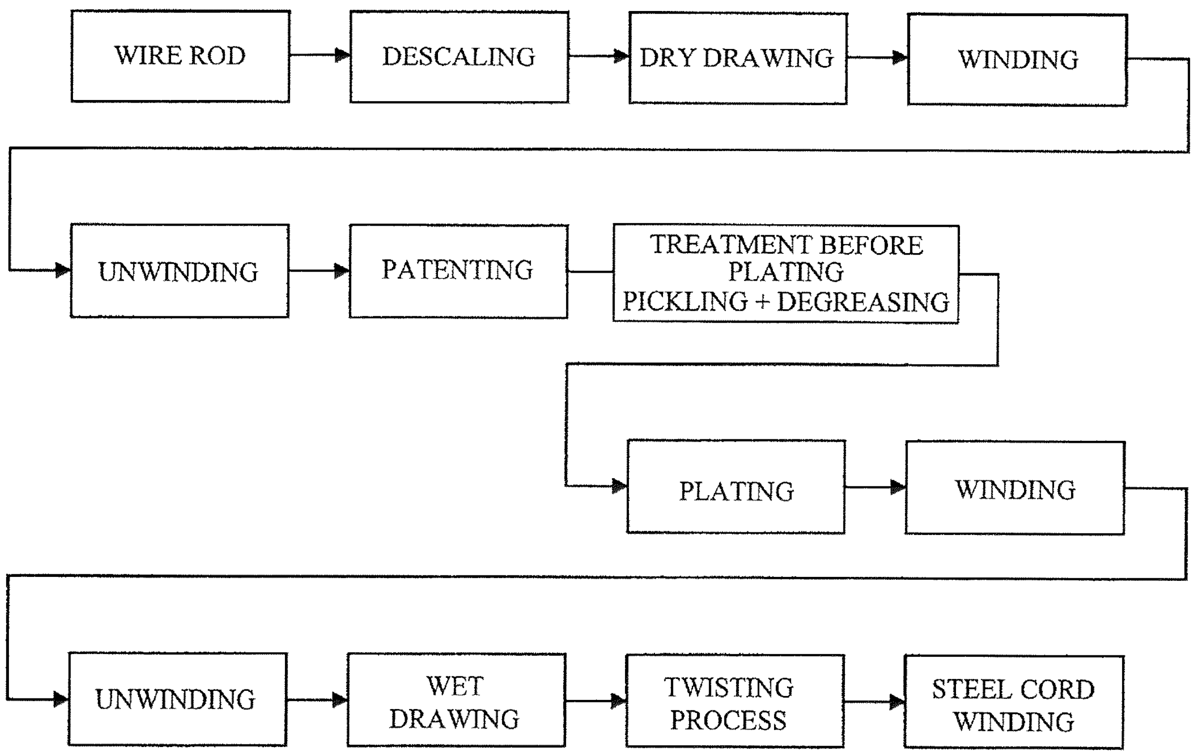
WIRE ROD
DESCALING
DRY DRAWING
WINDING
UNWINDING
PATENTING
TREATMENT BEFORE PLATING PICKLING + DEGREASING
PLATING
WINDING
UNWINDING
WET DRAWING
TWISTING PROCESS
STEEL CORD WINDING

**FIG.5**

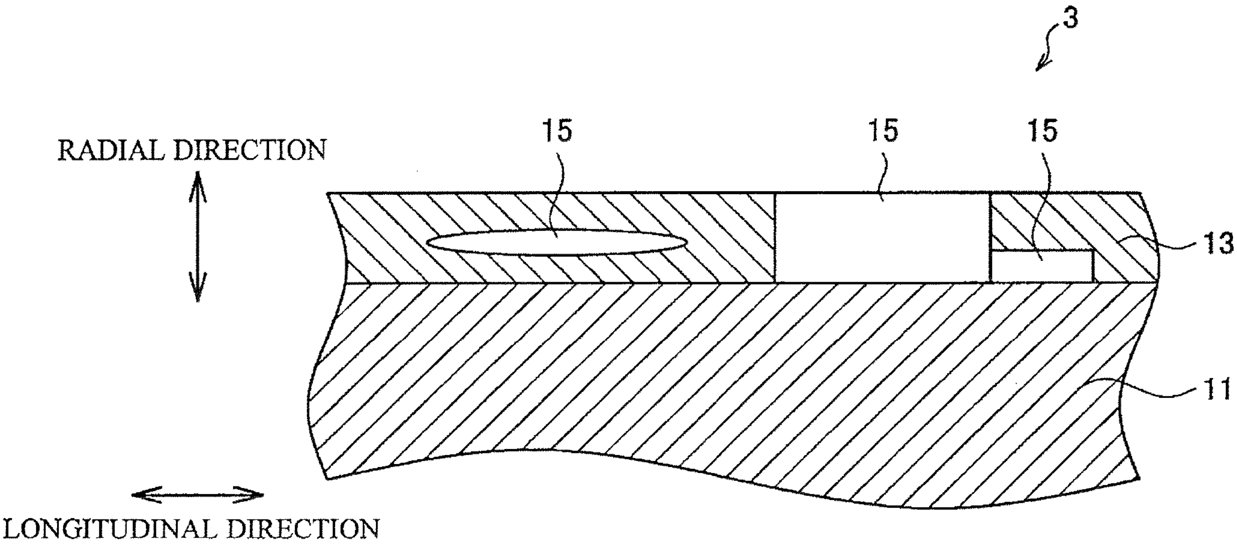

## INTERNATIONAL SEARCH REPORT

International application No.
PCT/JP2018/002589

A. CLASSIFICATION OF SUBJECT MATTER
Int. Cl. C25D7/06(2006.01)i, B60C9/00(2006.01)i, C25D5/26(2006.01)i, D07B1/06(2006.01)i

According to International Patent Classification (IPC) or to both national classification and IPC

B. FIELDS SEARCHED

Minimum documentation searched (classification system followed by classification symbols)
Int. Cl. C25D7/06, B60C9/00, C25D5/26, D07B1/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 7-331480 A (PIRELLI COORDINAMENTO PNEUMATICI S.P.A) 19 December 1995, claim 1, paragraphs [0001]-[0002], [0039] & US 5722039 A, claim 1, page 2, left column, lines 6-20, page 3, right column, lines 39-51 & EP 669409 A1 & IT MI940335 A & AU 1236195 A & ES 2120087 T & TR 28803 A & AT 167528 T & AU 704718 B & CA 2143354 A & KR 10-0389813 B | 1-2, 10-15<br>3-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08.03.2018 | 20.03.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/002589

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 1-222090 A (KAWATETSU KOSEN KOGYO KK) 05 September 1989, embodiments, page 1, left column, lines 16-20 (Family: none) | 1, 5, 10-14<br>2-4, 6-9, 15 |
| A | JP 4-193981 A (SHINKO WIRE CO., LTD.) 14 July 1992, claim 1, embodiments (Family: none) | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017012448 A
- JP 4921879 B
- JP 7018590 A
- JP 2015196937 A
- JP 2016033235 A
- JP 4183893 A